Europäisches Patentamt

European Patent Office

Office européen des brevets

(19)

(11) EP 0 501 325 B1

(12) EUROPÄISCHE PATENTSCHRIFT

(45) Veröffentlichungstag und Bekanntmachung des Hinweises auf die Patenterteilung:
16.07.1997 Patentblatt 1997/29

(51) Int Cl.$^6$: **G03G 5/024**, G03G 13/056, G02F 1/1333

(21) Anmeldenummer: 92102912.0

(22) Anmeldetag: 21.02.1992

(54) **Reversible oder irreversible Erzeugung einer Abbildung**

Reversible or irreversible production of an image

Production réversible ou irréversible d'une image

(84) Benannte Vertragsstaaten:
BE CH DE FR GB LI NL

(30) Priorität: 28.02.1991 DE 4106353

(43) Veröffentlichungstag der Anmeldung:
02.09.1992 Patentblatt 1992/36

(73) Patentinhaber: BASF Aktiengesellschaft
67063 Ludwigshafen (DE)

(72) Erfinder:
• Bach, Volker, Dr.
W-6730 Neustadt (DE)
• Etzbach, Karl-Heinz, Dr.
W-6710 Frankenthal (DE)
• Fuchs, Harald, Dr.
W-6719 Carlsberg (DE)
• Siemensmeyer, Karl, Dr.
W-6710 Frankenthal (DE)
• Wagenblast, Gerhard, Dr.
W-6719 Weisenheim (DE)

(56) Entgegenhaltungen:
EP-A- 0 322 903          WO-A- / 4514
DE-A- 1 908 118          DE-A- 1 957 991
US-A- 4 675 699

• PATENT ABSTRACTS OF JAPAN vol. 8, no. 223 (P-307)12. Oktober 1984 ( OKI DENKI KOGYO K.K. ) 16. Juni 1984 & JP-A-59 104 625

## Beschreibung

Die vorliegende Erfindung betrifft ein Verfahren zur reversiblen oder irreversiblen Erzeugung einer Abbildung durch bildmäßige Einwirkung eines elektrischen Feldes, wodurch auf der Oberfläche einer Aufzeichnungsschicht ein der bildmäßigen Einwirkung des elektrischen und/oder magnetischen Felds entsprechendes Muster aus Oberflächenladungen resultiert.

Verfahren dieser Art, bei welchen Muster aus Oberflächenladungen in der unterschiedlichsten Art und Weise unter Ausnutzung verschiedener physikalischer Mechanismen erzeugt werden können, sind bekannt. Beispielhaft sei die Xerographie oder Elektrophotographie genannt, bei welcher eine photoleitende Aufzeichnungsschicht z. B. mittels einer Hochspannungscoronaentladung elektrisch positiv oder negativ aufgeladen wird, wonach die elektrisch aufgeladene Aufzeichnungsschicht mit aktinischem Licht bildmäßig belichtet wird. Durch die Belichtung wird die photoleitende Aufzeichnungsschicht in ihren belichteten Bereichen elektrisch leitend, so daß die zuvor erzeugte elektrostatische Aufladung in diesen Bereichen über einen elektrisch leitenden Träger abfließen kann. Hierdurch wird ein latentes elektrostatisches Bild auf der photoleitenden Aufzeichnungsschicht erzeugt, welches mit Hilfe geeigneter flüssiger oder fester Toner zu einem sichtbaren Bild entwickelt werden kann. Dieses Tonerbild kann dann in üblicher und bekannter Weise von der Aufzeichnungsschicht auf eine andere Oberfläche übertragen werden, wodurch eine Photokopie resultiert. Andererseits kann das Tonerbild auch auf der photoleitenden Aufzeichnungsschicht, beispielsweise durch Erhitzen, fixiert werden, wonach die belichteten und daher tonerfreien Bereiche der photoleitenden Aufzeichnungsschicht mit Hilfe geeigneter flüssiger Entwicklerlösungsmittel weggewaschen werden können. Die hierbei resultierende Reliefschicht kann dann beispielsweise zu Druckzwecken verwendet werden. Der dieser Technik der bildmäßigen Informationsaufzeichnung zugrundeliegende physikalische Prozeß ist in der wissenschaftlichen Literatur auch unter dem Namen "Carlson-Prozeß" bekannt. Zusammenfassend läßt sich sagen, daß bei der Xerographie das Muster aus Oberflächenladungen durch Erzeugen und bildmäßiges Entfernen freier Ladungsträger gebildet wird.

Bekanntermaßen weist das xerographische Verfahren Nachteile auf. So müssen zur Erzeugung der Hochspannungscoronaentladung zur Aufladung der Oberfläche der photoleitenden Aufzeichnungsschicht Gleichspannungen in der Größenordnung von 6 kV bis 10 kV angewendet werden, was sicherheitstechnische und, wegen der Bildung von Ozon, auch toxikologische Probleme aufwirft. Weil außerdem das Muster aus Oberflächenladungen von freien elektrischen Ladungen gebildet wird, wird der Verfahrenserfolg durch die Anwesenheit von Wasser beeinträchtigt. Das bedeutet, daß zu große Luftfeuchtigkeit eine frühzeitige Ableitung der Oberflächenladungen bereits im Dunkeln verursachen oder eine genügende Aufladung der Oberfläche der photoleitenden Aufzeichnungsschicht verhindern. Des weiteren ist es bei der Xerographie nicht möglich, nach einem einzigen Belichtungsvorgang mehrere Kopien herzustellen.

Ein modifiziertes xerographisches Verfahren, welches diese Nachteile in gewissem Umfang überwindet, ist aus der DE-A-15 22 688 bekannt. Bei diesem bekannten Verfahren wird das Muster aus Oberflächenladungen dadurch erzeugt, daß man eine geeignete photoleitende Aufzeichnungsschicht in Anwesenheit eines elektrischen Feldes einer Feldstärke von 1 000 V/cm bis 15 000 V/cm mit Licht vollflächig bestrahlt. Hierdurch wird in der Aufzeichnungsschicht eine gleichförmige innere elektrische Polarisation erzeugt. Danach wird das Muster aus Oberflächenladungen durch örtliche Zerstörung oder Veränderung der inneren Polarisation gebildet. Somit handelt es sich bei dem Muster aus Oberflächenladungen im Unterschied zu der Xerographie im engeren Sinne um ein remanentes elektrisches Polarisationsbild, welches entweder aus elektrisch positiv oder elektrisch negativ geladenen Bereichen und ungeladenen Bereichen oder aus elektrisch positiv und elektrisch negativ geladenen Bereichen besteht. Dieses remanente elektrische Polarisationsbild kann in üblicher und bekannter Weise mit flüssigen oder festen Tonern betonert werden, wobei die Möglichkeit besteht, das aus elektrisch negativ und elektrisch positiv geladenen Bereichen zusammengesetzte remanente elektrische Polarisationsbild gleichzeitig mit zwei Tonern entgegengesetzter elektrischer Ladung und unterschiedlicher Farbe zu betonern.

Auch dieses bekannte Verfahren weist noch immer zahlreiche Nachteile auf. So handelt es sich bei der hierbei zu verwendenden photoleitenden Aufzeichnungsschicht um eine vergleichsweise dicke (15 bis 55 µm) inhomogene Schicht aus einem photoleitenden Pigment, welches in einem elektrisch isolierenden Trägerstoff eingebettet ist. Dieser Trägerstoff, welcher für das bekannte Verfahren essentiell ist, verhindert, daß die Dicke der Aufzeichnungsschicht verringert werden kann. Außerdem muß an die photoleitende Aufzeichnungsschicht noch immer eine sehr hohe Spannung angelegt werden, damit der Verfahrenserfolg - die reversible Erzeugung einer Abbildung - gewährleistet ist. Des weiteren empfiehlt es sich, die polarisierte photoleitende Aufzeichnungsschicht gegen unerwünschte Lichteinwirkung abzuschirmen, was den apparativen Aufwand bei dem bekannten Verfahren generell vergrößert. Weil das bekannte Verfahren noch immer auf der Erzeugung freier Ladungsträger beruht, ist die polarisierte photoleitende Aufzeichnungsschicht noch immer empfindlich gegenüber Luftfeuchtigkeit, und in der Wärme können sich die elektrischen Ladungen wieder ausgleichen, was letztlich zu einem instabilen Bild führt. Ferner können Ladungsbilder, welche aus Bereichen entgegengesetzter Polarisation, d. h. elektrisch negativ und elektrisch positiv geladene Bereiche, zusammengesetzt sind, nur mit Hilfe einer weiteren, der photoleitenden Aufzeichnungsschicht direkt aufliegenden und nicht wieder entfernbaren Elektrode hergestellt werden. Diese weitere Elektrode verringert indes oftmals die Haftung der Toner auf den entsprechend geladenen Bereichen des Musters, was die Qualität der herzustellenden Photokopien drastisch verschlechtert.

Aufgabe der vorliegenden Erfindung ist es, ein neues Verfahren zur Herstellung mehrfarbiger Kopien oder Drucke zu finden, bei welchem auf der Oberfläche einer Aufzeichnungsschicht ein remanentes, dem Anteil der jeweiligen Grundfarbe entsprechendes elektrisches Polarisationsbild erzeugt wird, welches aus elektrisch geladenen und ungeladenen oder elektrisch positiven und elektrisch negativ geladenen Bereiche zusammengesetzt ist, wobei auch hier die Nachteile des Standes der Technik nicht mehr auftreten sollen.

Nicht zuletzt ist es die Aufgabe der vorliegenden Erfindung, ein neues Gerät zu finden, mit welchem das neue Verfahren zur reversiblen oder irreversiblen Erzeugung einer Abbildung und die neuen Photokopierverfahren ganz besonders einfach und rationell durchgeführt werden können.

Gegenstand der vorliegenden Erfindung ist ein Verfahren zur Herstellung mehrfarbiger Fotokopien durch sukzessive Erzeugung remanenter elektrischer Polarisationsbilder für jede der Grundfarben eines Bildmotivs auf der Oberfläche einer Aufzeichnungsschicht (a), wobei die Polarisationsbilder elektrisch geladene und ungeladene Bereiche enthalten, das gekennzeichnet durch die folgenden Verfahrensschritte ist:

(1) Aufbringen einer 0,1 μm bis 20 μm dicken, glas-artig erstarrenden nicht oder nur wenig photoleitenden Aufzeichnungsschicht (a) mit chiral smektisch flüssigkristallinem Verhalten, welche oberhalb der Glasstufe durch Anlegen eines äußeren elektrischen Feldes zwischen unterschiedlichen chiral smektisch flüssigkristallinen Ordungszuständen hin und her geschaltet werden kann, auf die Orientierungsschicht (e) eines elektrisch leitfähigen Trägers (b), welcher eine dimensionsstabilen Trägerschicht (c) eine Elektrodenschicht (d) und die Orientierungsschicht(e) übereinanderliegend enthält, wodurch ein Aufzeichnungselement (A, D, E) resultiert,

(2) bildmäßige, dem Anteil einer Grundfarbe im Bildmotiv entsprechende Umorientierung der Aufzeichnungsschicht (a) in einem elektrischen Feld zwischen der Elektrodenschicht (d) und einer Gegenelektrode (C, F) welche so angeordnet ist, daß sie vom Aufzeichnungselement (A, D, E) wieder entfernt werden Kann, der Elektrodenschicht (d) entgegengesetzt geschaltet ist und im direktem nicht, kraftschlüssigem Kontakt mit der Aufzeichnungsschicht (a) steht, unter Bildung eines remanenten elektrischen Polarisationsbildes, für die Grundfarbe, wobei das Polarisationsbild bei Raumtemperatur in Abwesenheit elektrischer und/oder magnetischer Felder stabile Bereiche enthält, in de-nen unterschiedliche chiral smektisch flüssigkristal-line Ordnungszustände der Aufzeichnungsschicht (a) vorliegen,

(3) Betonern des remanenten elektrischen Polarisationsbildes mit einem der Grundfarbe entsprechenden flüssigen oder festen Toner,

(4) übertragen des Tonerbildes auf eine andere Oberfläche,

(5) Reinigen der Aufzeichnungsschicht (a) von Tonerresten und Löschen des Polarisationsbildes durch Erwärmen von (a) in Abwesenheit eines elektrischen Feldes und

(6) Wiederholen der Verfahrensschritte (2) bis (5) für jede der anderen Grundfarben im Bildmotiv.

Zu dieser Lösung haben überraschenderweise Schichten beigetragen, welche chiral smektisch flüssigkristallines Verhalten zeigen, so daß sie bei ausreichender Einwirkung eines äußeren elektrischen Feldes entweder (i) in einen gepolten smektisch flüssigkristallinen Ordnungszustand überführt und nach dem Abkühlen in diesem Zustand glasartig eingefroren werden können oder (ii) zwischen zwei thermodynamisch stabilen (en-antiotropen), ferroelektrischen, smektisch flüssigkristal-linen Ordnungszuständen oder zwischen durch das elektrische Feld induzierten, unterschiedlichen chiral smektisch flüssigkristallinen Ordnungszuständen hin und her geschaltet werden können.

Das erfindungsgemäße Verfahren eignet sich für die Herstellung von Photokopien und Reliefschichten.

Ein weiterer Gegenstand der vorliegenden Erfindung ist ein neues zur einfacheren und rationelleren Durchführung des erfindungsgemäßen Verfahrens geeignetes Gerät, welches der reversiblen oder irreversiblen Erzeugung einer Abbildung durch bildmäßige Einwirkung eines elektrischen Feldes auf eine Aufzeichnungsschicht (a) dient, wodurch auf der Oberfläche der Aufzeichnungsschicht (a) ein der bildmäßigen Einwirkung des elektrischen Feldes entsprechendes Muster aus Oberflächenladungen resultiert, und welches

(A) mindestens ein Aufzeichnungselement, enthaltend (a) eine für das Verfahren geeignete Aufzeichnungsschicht und (b) einen elektrisch leitfähigen Träger, und

(B) mindestens eine Vorrichtung zur bildmäßigen Einwirkung eines elektrischen Feldes auf das Aufzeichnungselement (A), bestehend aus einer strukturierten oder unstrukturierten, beweglichen oder unbeweglichen Gegenelektrode (C)

umfaßt, das dadurch gekennzeichnet ist, daß

(D) die Aufzeichnungsschicht (a) ein glasartig erstarrendes, nicnt oder nur wenig photoleitendes, permanente Dipole aufweisendes organisches Material mit chiral smektisch flüssigkristallinen Verhalten enthält oder hieraus besteht, worin das Muster aus Oberflächenladungen ohne oder fast ohne Bildung freier Ladungsträger durch reversibles oder irreversibles bildmäßiges Ausrichten aller oder eines Teils der in der Aufzeichnungsschicht (a) vorhandenen permanenten Dipole erzeugt wird,

(E) der elektrisch leitfähige Träger (b) zumindest

(c) eine dimensionsstabile Trägerschicht,
(d) eine Elektrodenschicht und
(e) eine Orientierungsschicht
in der angegebenen Reihenfolge übereinanderliegend enthält, wobei die Aufzeichnungsschicht (a) der Orientierungsschicht (e) direkt aufliegt, und daß

(F) die Gegenelektrode (C) in direktem, nicht kraftschlüssigem Kontakt mit der Aufzeichnungsschicht (a) steht und so angeordnet ist, daß sie von dem Aufzeichnungselement (A, D, E) wieder entfernt werden kann, und daß sie entweder die Form einer fixierten Elektrodenleiste mit punktförmigen Elektroden oder die Form einer Spitze hat, welche in relativer Bewegung über das Aufzeichnungselement (A, D, E) hinweggeführt, werden kann.

Der elektrisch leitfähige Träger (b) kann ganz oder teilweise thermostatisiert werden.

Das Aufzeichnungselement (A, D, E) kann eben sein oder das Aufzeichnungselement (A, D, E) kann die Form einer Walze haben und gegen die Gegenelektrode (C, F) gedreht werden.

Das erfindungsgemäße Gerät kann auch

(H) mindestens eine Vorrichtung zum Betonern des in der Aufzeichnungsschicht (a) erzeugten Musters aus Oberflächenladungen mit festen oder flüssigen Tonern
aufweisen.

Außerdem kann es von Vorteil sein, wenn das Gerät (I) mindestens eine Vorrichtung zum Übertragen des Tonerbildes von der Aufzeichnungsschicht (a) auf eine andere Oberfläche,
bzw.

(J) mindestens eine Vorrichtung zum Fixieren des Tonerbildes, bzw.

(K) Vorrichtungen zum vollflächigen Erwärmen der Aufzeichnungsschicht (A, D, E) und zur Erzeugung elektrischer und/oder magnetischer Felder, welche das Aufzeichnungselement (A, D, E) vollflächig aurchdringen können,

aufweist.

Im Hinblick auf den Stand der Technik war es nicht zu erwarten, daß die der Erfindung zugrundeliegende Aufgabe durch das neue Verfahren und durch das neue Gerät gelöst werden konnte, wobei die außerordentlich zahlreichen vorteilhaften Ausgestaltungsmöglichkeiten des neuen Verfahrens einerseits und die ebenso zahlreichen Anwendungsmöglichkeiten des neuen Geräts andererseits noch mehr überraschten.

Das erfindungsgemäße Verfahren wird mit Hilfe der Aufzeichnungsschicht (a) ausgeübt.

Erfindungsgemäß sind all diejenigen Aufzeichnungsschichten (a) geeignet, welche ein glasartig erstarrendes, nicht oder nur wenig photoleitendes, permanente Dipole aufweisendes organisches Material mit chiral smektisch flüssigkristallinem Verhalten enthalten oder welche hieraus bestehen, wobei diejenigen Aufzeichnungsschichten (a), die nur aus einem solchen organischen Material bestehen, gut geeignet sind und daher erfindungsgemäß bevorzugt werden. In diesen Materialien sind, bedingt durch die nicht vorhandene oder nur geringe Leitfähigkeit, keine oder nur sehr wenige freie Ladungsträger vorhanden sind.

Diese geeigneten erfindungsgemäß zu verwendenden organischen Materialien können niedermolekulare, oligomere oder hochmolekulare Verbindungen sein, wobei sie im Falle der hochmolekularen Verbindungen auch zwei- oder dreidimensional vernetzt sein können.

Die für den erfindungsgemäßen Anwendungszweck verwendeten Verbindungen mit chiral smektisch flüssigkristallinem Verhalten enthalten permanente Dipole, welche sich üblicherweise nicht so ausrichten, daß ein makroskopisches Dipolmoment resultiert. Indes können ihre permanenten Dipole bei entsprechenden Temperaturen durch ein elektrisches Feld bevorzugt in Feldrichtung ausgerichtet werden. Nach dem Abkühlen des betreffenden organischen Materials unter seine Glastemperatur $T_G$ wird die Ausrichtung der permanenten Dipole glasartig eingefroren, so daß ein makroskopisches Dipolmoment resultiert (vgl. die US-A-4 762 912).

Aus den für den erfindungsgemäßen Anwendungszweck verwendeten Verbindungen mit chiral smektisch flüssigkristallinem Verhalten sind diejenigen hervorzuheben, welche in dünnen Schichten enantiotropes, chiral smektisch flüssigkristallines Verhalten zeigen, so daß sie bei ausreichender Einwirkung eines äußeren elektrischen Feldes zwischen unterschiedlichen Ordnungszuständen hin und her geschaltet werden können.

Ein solches Verhalten zeigen bekanntermaßen chirale mesogene Verbindungen oder Gruppen, welche mindestens ein optisch aktives Zentrum enthalten. Diese Verbindungen oder Gruppen können eine chiral smektisch flüssigkristalline Phase bilden, worin die chiralen mesogenen Verbindungen oder Gruppen durch die intermolekularen Wechselwirkungen insgesamt parallel ausgerichtet und zu mit jeweils gleichen Abständen übereinander gestapelten Mikroschichten zusammengefügt sind.

Die sogenannten chiral smektisch flüssigkristallinen Phasen weisen in Abwesenheit eines äußeren elektrischen Feldes keine elektrische Spontanpolarisation auf. Durch Anlegen eines äußeren elektrischen Feldes kann in dieser chiral smektisch flüssigkristallinen Phase eine dem anliegenden Feld proportionale Polarisation induziert werden, welche im Glaszustand eingefroren werden kann. Das Vorzeichen der durch das Feld induzierten Polarisation hängt von der Richtung des elektrischen Feldes ab.

In der chiral smektisch flüssigkristallinen Phase liegt der für smektisch flüssigkristalline Phasen allgemein typische Mikroschichtaufbau vor, wobei die Moleküllängsachsen der chiralen mesogenen Verbindungen oder Gruppen in den einzelnen Mikroschichten im Mittel einen Tiltwinkel $\Theta$ von $0°$ gegenüber der Schichtnormale $\vec{Z}$ aufweisen. Die Richtung der Neigung und das Maß der Neigung oder der Tiltwinkel $\Theta$ der Moleküllängsachsen in einer Mikroschicht gegenüber der Schichtnormale $\vec{Z}$ wird durch den Direktor $\vec{n}$ gekennzeichnet und kann durch die Größe und Richtung des anliegenden elektrischen Feldes bestimmt werden. Dieses ist gleichzeitig mit einer Ausrichtung der lateralen Dipolmomente der chiralen mesogenen Verbindungen oder Gruppen zu einem makroskopischen Dipolmoment senkrecht zum Direktor $\vec{n}$ und senkrecht zur Schichtnormalen $\vec{Z}$ verbunden. Indes tritt in Abwesenheit eines elektrischen Feldes kein optisch nachweisbarer Tilt oder keine optisch nachweisbare Neigung des Direktors $\vec{n}$ zur Schichtnormalen $\vec{Z}$, d.h. keine Ausrichtung der Dipolmomente, auf und damit auch keine makroskopische Polarisation.

Wird indes eine solche chiral smektische flüssigkristalline Phase in einem äußeren elektrischen Feld des geeigneten Vorzeichens und der geeigneten Ausrichtung erwärmt oder einem sehr starken äußeren elektrischen Feld des geeigneten Vorzeichens und der geeigneten Ausrichtung ausgesetzt, kann ein von der jeweils verwendeten chiralen Substanz abhängige Polarisation proportional zum elektrische Feld induziert werden, so daß der Polarisationsvektor $\vec{P}$ und die Richtung des äußeren Feldes übereinstimmen. Diese Polarisation beruht auf dem "Abkippen" der Moleküllängsachsen der chiralen mesogenen Verbindungen oder Gruppen um einen durch das Feld induzierten Tiltwinkel $\Theta$, welcher abhängig ist von Größe und Richtung des elektrischen Feldes. Da hierbei das Abkippen der Moleküllängsachsen der chiral smektisch flüssigkristallinen Verbindungen oder Gruppen auf einer Kegelbahn erfolgt, vollzieht sich der Wechsel der chiral smektisch flüssigkristallinen Ordnungszustände sehr rasch, weswegen die Schaltzeiten $\tau$ für das Hin- und Herschalten der chiral smektischen flüssigkristallinen Phase zwischen diesen chiral smektisch flüssigkristallinen Ordnungszuständen ausgesprochen niedrig sind.

Hierbei sind solche erfindungsgemäß zu verwendenden chiralen mesogenen Verbindungen und Gruppen von ganz besonderem Vorteil, in welchen nach der lokalen Einwirkung eines elektrischen Feldes einer der chiral smektisch flüssigkristallinen Ordnungszustände bei Raumtemperatur lokal glasartig eingefroren werden kann, wobei in den anderen dem elektrischen Feld nicht ausgesetzten Bereichen des organischen Materials die betreffenden chiralen mesogenen Verbindungen oder Gruppen entweder in einem anderen chiral smektisch flüssigkristallinen Ordnungszustand, in einer sonstigen, nicht notwendigerweise ferroelektrischen, flüssigkristallinen Phase, in ungeordneten Mikrodomänen (Streuzentren) oder in einer isotropen 1-Phase vorliegen. Erfindungsgemäß ist es von ganz besonderem Vorteil, wenn die chiralen mesogenen Verbindungen oder Gruppen in einem anderen chiral smektisch flüssigkristallinen Ordnungszustand vorliegen.

Dabei ergibt sich für die Aufzeichnungsschicht (a) ein zusätzlicher Vorteil, wenn die in ihr enthaltenen chiralen mesogenen Verbindungen oder Gruppen unterhalb $200°C$ in die isotrope I-Phase übergehen, d. h., daß sie einen Klärpunkt unterhalb $200°C$ haben.

Es ist für die erfindungsgemäß zu verwendende Aufzeichnungsschicht (a) von ganz besonderem Vorteil, wenn die in ihr enthaltenen permanente Dipole aufweisenden organischen Materialien eine Glastemperatur Tg oberhalb $25°C$ haben.

Beispiele für Verbindungen mit chiral smektisch flüssigkristallinem Verhalten, welche für den erfindungsgemäßen Anwendungszweck insbesondere in Betracht kommen, sind aus der EP-A-0 184 482, der EP-A-0 228 703, der EP-A-0 258 898, der EP-A-0 231 858, der EP-A-0 231 857, der EP-A-0 271 900 oder der EP-A-0 274 128 bekannt oder sie werden in der deutschen Patentanmeldung P 39 17 196.5 beschrieben.

Demnach zeigen die Aufzeichnungsschichten (a), welche aus chiralen mesogenen Verbindungen der vorstehend genannten Art bestehen oder welche chirale mesogene Gruppen der vorstehend genannten Art enthalten, bei ihrer erfindungsgemäßen Verwendung ganz besondere Vorteile und sind deshalb ganz besonders gut für das erfindungsgemäße Verfahren geeignet.

In den erfindungsgemäßen Aufzeichnungsschichten (a) sind die Mikroschichtebenen der chiral smektischen flüssigkristallinen Phase, welche von den chiralen mesogenen Verbindungen oder Gruppen gebildet wird, senkrecht zur Ebene der Aufzeichnungsschicht (a) orientiert.

Die erfindungsgemäß zu verwendenden chiral smektisch flüssigkristallinen Aufzeichnungsschichten (a) weisen im allgemeinen in Abwesenheit eines elektrischen Feldes keine Polarisation auf. Es kann jedoch durch ein anliegendes Feld ein dem induzierten Tiltwinkel $\Theta$ proportionale Polarisation induziert und im Glaszustand eingefroren werden, wobei die Dipoldichte oder die Summe der ausgerichteten Dipolmomente pro Volumeneinheit und Grad der jeweils verwendeten Aufzeichnungsschicht (a) bei 0,05 bis 20 nC/cm$^2\Theta$, vorteilhafterweise 0,5 bis 20 nC/cm$^2\Theta$, und insbesondere 0,9 bis 10 nC/cm$^2\Theta$, liegt.

Im allgemeinen hat die erfindungsgemäß zu verwendende Aufzeichnungsschicht (a) eine Dicke d von 0,1 bis 20 μm. Ist sie mehr als 20 μm dick, so kann es unter Umständen zu einem Verlust der Orientierung kommen, wogegen es bei einer Dicke d von < 0,1 μm zu ihrer Deformation, beispielsweise durch Kapillareffekte, kommen kann. Der Dickenbereich von 0,1 bis 20 μm stellt somit ein Optimum dar, innerhalb dessen die Dicke d der Aufzeichnungsschicht (a) breit variiert und den jeweiligen Anforderungen angepaßt werden kann, welche sich aus dem jeweils gewünschten anwendungstechnischen Eigenschaftsprofil einerseits und den physikalischen chemischen Eigenschaften der jeweils verwendeten organischen Materialien andererseits ergeben. Innerhalb dieses Dickenbereichs ist derjenige von 0,1 bis 10, vorteilhafterweise 0,1 bis 8, und insbesondere 0,2 bis 5 μm, noch einmal besonders hervorzuheben, weil die hervorragenden Aufzeichnungsschichten (a) dieses Dickenbereichs bei der Durchführung des erfindungsgemäßen Verfahrens ganz besondere Vorteile, insbesondere eine höhere Empfindlichkeit gegenüber der bildmäßigen Einwirkung eines elektrischen Feldes und eine bessere Stabilität des remanenten elektrischen Polarisationsbildes, zeigen.

Die Herstellung der erfindungsgemäß zu verwendenden Aufzeichnungsschichten (a) weist methodisch keine Besonderheiten auf, sondern sie werden aus den vorstehend beschriebenen üblichen und bekannten und zum Teil im Handel erhältlichen geeigneten organischen Materialien, insbesondere aber aus

-   den niedermolekularen chiralen mesogenen Verbindungen mit chiral smektisch flüssigkristallinem Verhalten oder aus

-   den vernetzten oder unvernetzten Polymeren, welche chirale mesogene Seitengruppen mit chiral smektisch flüssigkristallinem Verhalten aufweisen,

nach den üblichen und bekannten Techniken der Herstellung dünner Schichten erzeugt.

Beispiele geeigneter Techniken zur Herstellung dünner Schichten aus niedermolekularen chiralen mesogenen Verbindungen der genannten Art sowie die betreffenden Verbindungen selbst sind z. B. aus der US-A-4 752 820, der WO-A-87/07890 oder der WO-A-86/02937 bekannt.

Des weiteren gehen aus der EP-A-0 184 482, der EP-A-0 228 703, der EP-A-0 258 898, der EP-A-0 231 858, der EP-A-0 231 857, der EP-A-0 271 900 sowie EP-A-0 274 128 die Techniken der Herstellung dünner Schichten aus vernetzten oder unvernetzten Polymeren mit chiralen mesogenen Seitengruppen der genannten Art sowie die betreffenden Polymeren selbst hervor oder sie werden z. B. in der EP-A-0 399 279 im Detail beschrieben. Die hierin genannten Techniken der Herstellung dünner Schichten und die hierbei verwendeten Polymeren werden für die Herstellung der erfindungsgemäß zu verwendenden Aufzeichnungsschichten (a) besonders bevorzugt eingesetzt.

Zur Durchführung des erfindungsgemäßen Verfahrens wird die erfindungsgemäß zu verwendende Aufzeichungsschicht (a) in der gewünschten geeigneten Dicke in üblicher und bekannter Weise auf die Orientierungsschicht (e) eines elektrisch leitfähigen Trägers (b), welcher zumindest eine dimensionsstabile Trägerschicht (c), eine Elektrodenschicht (d) und eine Orientierungsschicht (e) in der angegebenen Reihenfolge übereinanderliegend enthält, aufgetragen, wodurch ein Aufzeichnungselement (A, D, E) resultiert, welches zumindest die genannten Schichten (c), (d), (e) und (a) in der angegebenen Reihenfolge übereinanderliegend enthält.

Beispiele für dimensionsstabile Trägerschichten (c), Elektrodenschichten (d) und Orientierungsschichten (e), welche für den Aufbau des bei dem erfindungsgemäßen Verfahren zu verwendenden Aufzeichnungselements (A, D, E) geeignet sind, gehen aus den Patentschriften WO-A-86/02937, WO-A-87/07890, US-A-4 752 820, GB-A-2 181 263, US-A-4 752 820, EP-A-0 184 482, EP-A-0 205 187, EP-A-0 226 218, EP-A-0 228 703, EP-A-0 231 857, EP-A-0 231 858, EP-A-0 258 898, EP-A-0 271 900 oder EP-A-0 274 128 hervor oder sie werden in der EP-A-0 399 279 beschrieben.

Bei der Durchführung des erfindungsgemäßen Verfahrens wird dann durch bildmäßige Einwirkung eines elektrischen Feldes auf die Aufzeichnungsschicht (a) in deren Oberfläche ein der bildmäßigen Einwirkung des elektrischen Feldes entsprechendes Muster aus Oberflächenladungen, d. h., ein remanentes elektrisches Polarisationsbild, erzeugt. Dieses remanente elektrische Polarisationsbild setzt sich entweder aus elektrisch positiv und elektrisch negativ geladenen Bereichen oder aus elektrisch positiv oder elektrisch negativ geladenen Bereichen und ungeladenen Bereichen zusammen.

Erfindungsgemäß wird dieses Muster aus Oberflächenladungen bzw. das remanente elektrische Polarisationsbild ohne oder fast ohne Bildung freier Ladungsträger durch das reversible bildmäßige Ausrichten aller oder eines Teils der in der Aufzeichnungsschicht (a) vorhandenen permanenten Dipole erzeugt.

Erfindungsgemäß kann dies

(i) in erwärmten oder nicht erwärmten Aufzeichnungsschichten (a) durch reversibles bildmäßiges Zerstören der Ausrichtung eines Teils der in der Aufzeichnungsschicht (a) vorhandenen ausgerichteten permanenten Dipole,

(ii) in erwärmten oder nicht erwärmten Aufzeichnungsschichten (a) durch reversibles bildmäßiges Verändern oder Umkehren der Ausrichtung eines Teils der in der Aufzeichnungsschicht (a) vorhandenen ausgerichteten permanenten Dipole oder

(iii) in erwärmten oder nicht erwärmten Aufzeichnungsschichten (a) durch bildmäßiges Ausrichten eines Teils der in der Aufzeichnungsschicht (a) vorhandenen nicht ausgerichteten permanenten Dipole

bei der bildmäßigen Einwirkung eines elektrischen Feldes auf die Aufzeichnungsschicht (a) geschehen.

Erfindungsgemäß ist hierbei die bildmäßige Einwirkung eines elektrischen Feldes von Vorteil, welches über bewegliche und/oder strukturierte Schreibeinrichtungen erzeugt wird.

Das hierbei in erfindungsgemäßer Verfahrensweise resultierende Muster aus Oberflächenladungen bzw. das remanente elektrische Polarisationsbild kann nach seiner bestimmungsgemäßen Verwendung entweder durch vollflächiges Einwirken eines elektrischen und/oder magnetischen Feldes ohne Bildung freier Ladungsträger unter vollflächigem Ausrichten aller in der Aufzeichnungsschicht (a) vorhandenen permanenten Dipole oder unter vollflächigem Zerstören der in den einzelnen Bereichen des Musters oder des Bildes jeweils vorliegenden Ausrichtung der permanenten Dipole wieder gelöscht werden. Auch hierbei ist erfindungsgemäß ein elektrisches Feld von Vorteil.

Erfindungsgemäß kann nach dem Löschen ein neues Muster aus Oberflächenladungen bzw. ein remanentes elektrisches Polarisationsbild in der Aufzeichnungsschicht (a) erzeugt werden, weswegen das erfindungsgemäße Verfahren reversibel ist.

Ein Beispiel einer erfindungsgemäß bevorzugten bestimmungsgemäßen Verwendung des Musters aus Oberflächenladungen bzw. des remanenten elektrischen Polarisationsbildes ist seine Betonerung mit flüssigen oder festen Tonern, nach der man das resultierende Tonerbild auf eine andere Oberfläche übertragen kann, wodurch auf der anderen Oberfläche eine Photokopie des Musters oder Bildes entsteht.

Erfindungsgemäß kann man dann die Betonerung wiederholen, d. h., es können von einem Muster aus Oberflächenladungen bzw. von einem remanenten elektrischen Polarisationsbild mehrere Photokopien erhalten werden, was ein ganz besonderer Vorteil des erfindungsgemäßen Verfahrens ist. Indes kann das in der Aufzeichnungsschicht (a) vorhandene Muster oder Bild in der vorstehend genannten Weise wieder gelöscht werden, wonach man ein neues Muster oder Bild in erfindungsgemäßer Weise erzeugen und nach seiner erneuten Betonerung zu Kopierzwecken verwenden kann.

Erfindungsgemäß kann außerdem das in erfindungsgemäßer Weise erzeugte remanente elektrische Polarisationsbild, welches aus elektrisch positiv und elektrisch negativ geladenen Bereichen zusammengesetzt ist oder diese Bereiche enthält, gleichzeitig oder sukzessive mit mindestens zwei flüssigen oder festen Tonern entgegengesetzter elektrischer Ladung betonert werden, wodurch ein zwei- oder mehrfarbiges Tonerbild entsteht, welches nach seiner übertragung von der Aufzeichnungsschicht (a) auf eine andere Oberfläche eine zwei- oder mehrfarbige Photokopie liefert. Weitere Vorteile ergeben sich, wenn man hierbei mindestens zwei Toner verwendet, welche optisch stark kontrastieren. Auch hierbei können erfindungsgemäß mehrere Photokopien von ein und demselben remanenten elektrischen Polarisationsbild erhalten werden.

Es ist indes auch möglich, das in erfindungsgemäßer Weise erzeugte Muster aus Oberflächenladungen oder das remanente elektrische Polarisationsbild mit mindestens einem flüssigen oder festen Toner zu betonern, wonach man das hierbei resultierende Tonerbild, beispielsweise durch Erhitzen, fixiert. Es versteht sich von selbst, daß dieses in erfindungsgemäßer Verfahrensweise hergestellte fixierte Tonerbild nicht mehr gelöscht werden kann, weswegen diese Ausführungsform des erfindungsgemäßen Verfahrens irreversibel ist. Dies wird jedoch dadurch aufgewogen, daß man das fixierte Tonerbild durch Auswaschen seiner unbetonerten Bereiche mit Hilfe geeigneter Entwicklerlösungsmittel entwickeln kann, wodurch auf dem Aufzeichnungselement eine Reliefschicht resultiert, die u.a. zu Druckzwecken verwendet werden kann.

Das erfindungsgemäße Verfahren kann mit den unterschiedlichsten Geräten durchgeführt werden.

Erfindungsgemäß ist es indes von Vorteil, wenn man für die Durchführung des erfindungsgemäßen Verfahrens das erfindungsgemäße Gerät verwendet.

Das erfindungsgemäße Gerät umfaßt mindestens eines der vorstehend im Detail beschriebenen Aufzeichnungselemente (A, D, E) sowie mindestens eine Vorrichtung (B) mit mindestens einer Gegenelektrode (C, F), welche der bildmäßigen Einwirkung eines elektrischen Feldes dienen.

Die Vorrichtung (B) zur bildmäßigen Einwirkung eines elektrischen Feldes, enthält eine strukturierte und/oder bewegliche Gegenelektrode (C, F).

Außerdem ist die Vorrichtung (B) so angeordnet, daß die Gegenelektrode (C, F) vom Aufzeichnungselement (A, D, E) wieder entfernt werden kann. Die Gegenelektrode (C, F) steht in direktem, nicht kraftschlüssigen Kontakt mit der Aufzeichnungsschicht (a). Sie kann hierbei die Form einer Spitze, welche in relativer Bewegung mit einer geeigneten Geschwindigkeit über das Aufzeichnungselement (A, D, E) hinwegbewegt werden kann, oder die Form einer fixierten Elektrodenleiste mit punktförmigen Elektroden, die alle separat angesteuert werden können, haben. Die Gegenelektrode (C, F) der Vorrichtung (B) ist der Elektrodenschicht (d) des elektrisch leitfähigen Trägers (b) entgegengesetzt geschaltet, so daß an der Gegenelektrode (C, F) ein Feld +E oder -E und an der Elektrodenschicht (d) des elektrisch leitfähigen Trägers (b) Masse oder ein Feld +E an der Gegenelektrode (C, F) und ein Feld -E oder Masse in der Elektrodenschicht (d) oder ein Feld -E an der Gegenelektrode (C, F) und ein Feld +E oder Masse an der Elektrodenschicht (d) anliegen.

Das erfindungsgemäße Gerät kann hierbei ein ebenes oder ein walzenförmiges Aufzeichnungselement (A, D, E) enthalten. Das walzenförmige Aufzeichnungselement (A, D, E) kann zum Zwecke der Informationsaufzeichnung an der fixierten Gegenelektrode (C, F) vorbeigedreht werden.

Des weiteren kann das erfindungsgemäße Gerät mindestens eine Vorrichtung (H) zum Betonern des in der Aufzeichnungsschicht (a) erzeugten Musters aus Oberflächenladungen mit festen oder flüssigen Tonern, mindestens eine Vorrichtung (I) zum übertragen des Tonerbildes von der Aufzeichnungsschicht (a) auf eine andere Oberfläche oder alternativ hierzu mindestens eine Vorrichtung (J) zum Fixieren des Tonerbilds und mindestens eine Vorrichtung (K) zur Erzeugung elektrischer und/oder magnetischer Felder, welche das Aufzeichnungselement (A, D, E) vollflächig durchdringen können, enthalten.

Die Vorrichtung (K) ist vorteilhafterweise so angeordnet, daß sie vom Aufzeichnungselement (A, D, E) wieder entfernt werden kann. Sie steht im allgemeinen in direktem, nicht kraftschlüssigem Kontakt mit der Aufzeichnungsschicht (a). Sie kann hierbei die Form einer ebenen oder gebogenen leitfähigen Platte oder einer Walze haben, welche in relativer Bewegung mit einer geeigneten Geschwindigkeit über das Aufzeichnungselement (A, D, E) hinweg bewegt wird. Die Vorrichtung (K) ist, wenn sie der Erzeugung elektrischer Felder dient, der Elektrodenschicht (d) des elektrisch leitfähigen Trägers (b) entgegengesetzt geschaltet. Die Vorrichtung (K) kann außerdem auch der vollflächigen Erwärmung des Aufzeichnungselements (A, D, E) dienen.

Hierbei ist es erfindungsgemäß von Vorteil, wenn die Oberfläche der Vorrichtung (K) entweder derart strukturiert ist, daß sie als Orientierungsschicht (g) wirkt, oder von einer Orientierungsschicht (g) bedeckt ist, welche entweder in ihrer Zusammensetzung und Struktur der Orientierungsschicht (e) des Aufzeichnungselements (A, D, E) entspricht oder sich hiervon unterscheidet. Alternativ hierzu kann die Oberfläche der Vorrichtung (K) von einer Polysiloxanschicht (h) bedeckt sein.

Daneben enthält das erfindungsgemäße Gerät übliche und bekannte elektrische und/oder mechanische Vorrichtungen, welche für die Steuerung des erfindungsgemäßen Gerätes von Nutzen sind, wie elektrische und/oder mechanische Regelsysteme und Servomotoren. Außerdem kann das erfindungsgemäße Gerät an einen Prozeßrechner angeschlossen und von diesem geregelt werden.

Die Durchführung des erfindungsgemäßen Verfahrens mit Hilfe des erfindungsgemäßen Gerätes kann grundsätzlich in sechserlei Weise durchgeführt werden, was nachfolgend beispielhaft erläutert wird:

1. Zwischen der Vorrichtung (K) und der Elektrodenschicht (d) des erwärmten Aufzeichnungselements (A, D, E) wird eine geeignete Spannung im Bereich von 0 bis 150 V angelegt. Hiernach wird die Vorrichtung (K) mit einer geeigneten Geschwindigkeit in relativer Bewegung über die Aufzeichnungsschicht (a) des Aufzeichnungselements (A, D, E) hinweggeführt. Dadurch werden die in der Aufzeichnungsschicht (a) vorhandenen permanenten Dipole vollflächig ausgerichtet oder die Ausrichtung der permanenten Dipole vollflächig verstärkt. Unmittelbar hinter der Vorrichtung (K) erfolgt die bildmäßige Einwirkung des elektrischen Feldes der Gegenelektrode (C, F), wodurch das Muster aus Oberflächenladungen oder das remanente elektrische Polarisationsbild resultiert. Das Aufzeichnungselement (A, D, E), welches nun das Muster oder das Bild enthält, wird dann in relativer Bewegung mit einer auf die Bewegung der walzenförmigen Gegenelektrode (C, F) abgestimmten Geschwindigkeit zu der Betonerungsvorrichtung (H) geführt und dort betonert. Hiernach wird das betonerte Aufzeichnungselement (A, D, E) in relativer Bewegung mit der abgestimmten Geschwindigkeit zu der Vorrichtung (I) für das Übertragen des Tonerbildes von der Aufzeichnungsschicht (a) auf eine andere Oberfläche geführt. Hiernach kann entweder das tonerfreie Aufzeichnungselement zur Betonerungsvorrichtung (H) und zur Vorrichtung (I) zum Übertragen des Tonerbildes zurückgeführt werden, wodurch zwei oder mehr Kopien des ursprünglichen Musters oder Bildes erzeugt werden können, oder es kann zum Löschen des Musters oder des Bildes die Vorrichtung (K) in abgestimmter relativer Bewegung erneut über das Aufzeichnungselement (A, D, E) hinwegbewegt werden.

2. Statt zu einer Vorrichtung (I) zum übertragen des Tonerbildes von der Aufzeichnungsschicht (a) auf eine andere Oberfläche geführt zu werden, kann das betonerte Aufzeichnungselement (A, D, E) zu einer Vorrichtung (J) zum Fixieren des Tonerbildes bewegt werden, wonach das Aufzeichnungselement (A, D, E) zur Weiterverarbeitung in geeigneter Weise das erfindungsgemäße Gerät verläßt.

3. An das Aufzeichnungselement (A, D, E) mit einer nicht vollflächig ausgerichteten Aufzeichnungsschicht (a) wird mit Hilfe einer Elektrodenleiste (C, F) bildmäßig ein senkrecht zu der Aufzeichnungsschicht (a) orientiertes elektrisches Feld angelegt, wodurch das Muster aus Oberflächenladungen oder das remanente elektrische Polarisationsbild entsteht. Hiernach wird das Aufzeichnungselement (A, D, E) in relativer Bewegung mit einer geeigneten Geschwindigkeit wie unter Ziffer 1 beschrieben zu den Vorrichtungen zum Betonern (H) und zum Übertragen des Tonerbilds von der Aufzeichnungsschicht (a) auf eine andere Oberfläche (I) oder, alternativ hierzu, zu einer Vorrichtung (J) zum Fixieren des Tonerbildes geführt. Sofern das in der Aufzeichnungsschicht (a) vorhandene Muster oder Bild wieder gelöscht werden soll, wird die Aufzeichnungsschicht (a) so hoch erhitzt, daß die bildmäßige Ausrichtung der permanenten Dipole in der Aufzeichnungsschicht (a) wieder zerstört wird.

4. Diese Ausführungsform wird wie unter Ziffer 1 beschrieben durchgeführt, nur daß die Vorrichtung (K) ein Potential zwischen -1 und -150 V bezogen auf Masse besitzt, wodurch ein elektrisches Polarisationsbild resultiert, welches aus elektrisch positiv und negativ geladenen Bereichen zusammengesetzt ist, und daß das remanente elektrische Polarisationsbild in der Betonerungsvorrichtung (H), vorteilhafterweise sukzessive, mit zwei optisch stark kontrastierenden Tonern entgegengesetzter elektrischer Ladung betonert wird, wodurch ein zweifarbiges Tonerbild entsteht. Dieses wird in der gleichen Weise, wie sie bei der Ausführungsform unter Ziffer 1 beschrieben wird, zur Herstellung von Photokopien verwendet, welche nun aber zweifarbig sind.

5. Zwischen der Vorrichtung (K) und der Elektrodenschicht (d) des Aufzeichnungselements (A, D, E) wird ein geeignetes elektrisches Feld angelegt. Hiernach wird die Vorrichtung (K) mit einer geeigneten Geschwindigkeit in relativer Bewegung über die Aufzeichnungsschicht (a) des Aufzeichnungselements (A, D, E) hinweggeführt. Im Unterschied zu der unter Ziffer 1 beschriebenen Ausführungsform werden hierbei die Temperatur und die Feldstärke so gewählt, daß die Aufzeichnungsschicht (a) nicht vollflächig ausgerichtet wird. Unmittelbar hinter der sich bewegenden Vorrichtung (K) erfolgt die bildmäßige Einwirkung des elektrischen Feldes der Gegenelektrode (C, F) mit positivem Vorzeichen, wodurch ein erstes Muster aus Oberflächenladungen oder ein erstes remanentes Polarisationsbild resultiert. Hiernach wird dieser Abbildungsvorgang oder Verfahrensschritt wiederholt, nur daß zu diesem Zweck die Spannung zwischen der Vorrichtung (K) und der Elektrodenschicht (d) umgepolt wird und daß hierbei ein vom ersten remanenten elektrischen Polarisationsbild verschiedenes zweites Polarisationsbild mit entgegengesetzten elektrischen Oberflächenladungen gebildet wird. Im Anschluß daran wird das Aufzeichnungselement (A, D, E), dessen Aufzeichnungsschicht (a) elektrisch positive und elektrisch negative Bereiche enthält, in der gleichen Weise, wie sie bei der Ausführungsform unter Ziffer 4 beschrieben wird, zur Herstellung zweifarbiger Photokopien verwendet.

6. Diese Ausführungsform entspricht der unter Ziffer 1 beschriebenen, mit dem Unterschied, daß der Abbildungsvorgang für jede der Grundfarben eines mehrfarbigen Bildes durchgeführt wird, wobei die für die bildmäßige Einwirkung eines elektrischen Feldes benötigte Spannung dem Anteil der jeweilige Grundfarbe am Bild entspricht. Das erfindungsgemäße Verfahren ermöglicht somit die Gradation der Tonwerte bei der Abbildung mehrfarbiger Bilder.

Beispiel

Verfahren zur Erzeugung einer Abbildung durch bildmäßige Einwirkung eines elektrischen Feldes nach dem erfindungsgemäßigen Verfahren

Versuchsvorschrift:

Auf einen üblichen und bekannten elektrisch leitfähigen Träger (b) aus einem Glasträger (c), einer Elektrodenschicht (d) aus Indium-Zinn-Oxid (ITO) und einer Orientierungsschicht (e) aus angeriebenem Polyimid (ZLI-2640 von Merck AG, Darmstadt) wurde eine ca. 4 μm, dicke Aufzeichnungsschicht (a) aus einem chiral smektisch flüssigkristalline Seitengruppen enthaltenden Polymerisat in homeotroper Orientierung aufgebracht. Bei dem Abbildungsverfahren war die ITO-Elektrodenschicht (d) als Masse geschaltet. Die Aufzeichnungsschicht (a) wurde auf 140°C erwärmt. Die Information wurde dann in die erwärmte Aufzeichnungsschicht (a) mit Hilfe einer beweglichen Spitze eines Durchmessers von 1 mm als Gegenelektrode (C, F) bei einer Spannung von +100V zwischen (C, F) und der ITO-Elektrodenschicht (d) eingeschrieben. Hierbei wurde der Abstand zwischen der Gegenelektrode (C, F) und der Aufzeichnungsschicht (a) so lange verringert, bis die Feldstärke zwischen (C, F) und (d) genügend hoch war, um die Umorientierung des Direktors in der chiral smektisch flüssigkristallinen Phase zu bewirken. Der Direktor $\vec{n}$ bildete dabei in der Aufzeichnungsschicht (a) einen dem anliegenden elektrischen Feld entsprechenden, polarisationsmikroskopisch gemessenen einheitlichen Tiltwinkel $\Theta$ von 11°C aus, wodurch eine aus den Polarisationsstromkurven errechnete Polarisation von 10 nC/cm$^2$ resultierte. Die in dieser Weise eingeschriebene Information bzw. Struktur der Aufzeichnungsschicht (a) wurde bei Raumtemperatur glasartig eingefroren.

Die polarisationsmikroskopische Untersuchung der eingefrorenen Struktur ergab, daß die Aufzeichnungsschicht (a) in der Tat nur dort umorientiert war, wo sie in direkten Kontakt mit der Gegenelektrode (C, F) gekommen war. Das auf der Oberfläche der Aufzeichnungsschicht (a) vorhandene Ladungsbild konnte mit einem üblichen und bekannten Trockentonerpulver betonert werden. Das resultierende Tonerbild wies einen hohen Kontrast auf.

**Patentansprüche**

1. Verfahren zur Herstellung mehrfarbiger Fotokopien durch sukzessive Erzeugung remanenter elektrischer Polarisationsbilder für jede der Grundfarben eines Bildmotivs auf der Oberfläche einer Aufzeichnungsschicht (a), wobei die Polarisationsbilder elektrisch geladene und ungeladene Bereiche enthalten, gekennzeichnet durch die folgende Verfahrensschritte:

(1) Aufbringen einer 0,1 μm bis 20 μm dicken, glasartig erstarrenden nicht oder nur wenig photoleitenden Aufzeichnungsschicht (a) mit chiral smektisch flüssigkristallinem Verhalten, welche oberhalb der Glasstufe durch Anlegen eines äußeren elektrischen Feldes zwischen unterschiedlichen chiral smektisch flüssigkristallinen Ordungszuständen hin und her geschaltet werden kann, auf die Orientierungsschicht (e) eines elektrisch leitfähigen Trägers (b), welcher eine dimensionsstabilen Trägerschicht (c) eine Elektrodenschicht (d) und die Orientierungsschicht(e) übereinanderliegend enthält, wodurch ein Aufzeichnungselement (A, D, E) resultiert,

(2) bildmäßige, dem Anteil einer Grundfarbe im Bildmotiv entsprechende Umorientierung der Aufzeichnungsschicht (a) in einem elektrischen Feld zwischen der Elektrodenschicht (d) und einer Gegenelektrode (C, F) welche so angeordnet ist, daß sie vom Aufzeichnungselement (A, D, E) wieder entfernt werden kann, der Elektrodenschicht (d) entgegengesetzt geschaltet ist und in direktem, nicht kraftschlüssigem Kontakt mit der Aufzeichnungsschicht (a) steht, unter Bildung eines remanenten elektrischen Polarisationsbildes, für die Grundfarbe, wobei das Polarisationsbild bei Raumtemperatur in Abwesenheit elektrischer und/oder magnetischer Felder stabile Bereiche enthält, in denen unterschiedliche chiral smektisch flüssigkristalline Ordnungszustände der Aufzeichnungsschicht (a) vorliegen,

(3) Betonern des remanenten elektrischen Polarisationsbildes mit einem der Grundfarbe entsprechenden flüssigen oder festen Toner,

(4) übertragen des Tonerbildes auf eine andere Oberfläche,

(5) Reinigen der Aufzeichnungsschicht (a) von Tonerresten und Löschen des Polarisationsbildes durch Erwärmen von (a) in Abwesenheit eines elektrischen Feldes und

(6) Wiederholen der Verfahrensschritte (2) bis (5) für jede der anderen Grundfarben im Bildmotiv.

2. Verwendung des Verfahrens gemäß Anspruch 1 für die Herstellung von Photokopien.

3. Verwendung des Verfahrens gemäß Anspruch 1 für die Herstellung von Reliefschichten.

4. Gerät, welches der reversiblen oder irreversiblen Erzeugung einer Abbildung durch bildmäßige Einwirkung eines elektrischen Feldes auf eine Aufzeichnungsschicht (a) dient, wodurch auf der Oberfläche der Aufzeichnungsschicht (a) ein der bildmäßigen Einwirkung des elektrischen Feldes entsprechendes Muster aus Oberflächenladungen resultiert, und welches

(A) mindestens ein Aufzeichnungselement, enthaltend

(a) eine für das Verfahren geeignete Aufzeichnungsschicht und
(b) einen elektrisch leitfähigen Träger, und

(B) mindestens eine Vorrichtung zur bildmäßigen Einwirkung eines elektrischen Feldes auf das Aufzeichnungselement (A), bestehend aus einer strukturierten oder unstrukturierten, beweglichen oder unbeweglichen Gegenelektrode (C)

umfaßt, dadurch gekennzeichnet, daß

(D) die Aufzeichnungsschicht (a) ein glasartig erstarrendes, nicht oder nur wenig photoleitendes, permanente Dipole aufweisendes organisches Material mit chiral smektisch flüssigkristallinem Verhalten enthält oder hieraus besteht, worin das Muster aus Oberflächenladungen ohne oder fast ohne Bildung freier Ladungsträger durch reversibles oder irreversibles bildmäßiges Ausrichten aller oder eines Teils der in der Aufzeichnungsschicht (a) vorhandenen permanenten Dipole erzeugt wird,

(E) der elektrisch leitfähige Träger (b) zumindest

(c) eine dimensionsstabile Trägerschicht,
(d) eine Elektrodenschicht und
(e) eine Orientierungsschicht

in der angegebenen Reihenfolge übereinanderliegend enthält, wobei die Aufzeichnungsschicht (a) der Orientierungsschicht (e) direkt aufliegt, und daß

(F) die Gegenelektrode (C) in direktem, nicht kraftschlüssigem Kontakt mit der Aufzeichnungsschicht (a) steht und so angeordnet ist, daß sie von dem Aufzeichnungselement (A, D, E) wieder entfernt werden kann, und daß sie entweder die Form einer fixierten Elektrodenleiste mit punktförmigen Elektroden oder die Form einer Spitze hat, welche in relativer Bewegung über das Aufzeichnungselement (A, D, E) hinweggeführt werden kann, zur Durchführung des Verfahrens gemäß einem der Ansprüche 1 bis 3.

5. Das Gerät nach Anspruch 4, dadurch gekennzeichnet, daß der elektrisch leitfähige Träger (b) ganz oder teilweise thermostatisiert werden kann.

6. Das Gerät nach Anspruch 4 oder 5, dadurch gekennzeichnet, daß das Aufzeichnungselement (A, D, E) eben ist.

7. Das Gerät nach einem der Ansprüche 4 oder 5, dadurch gekennzeichnet, daß das Aufzeichnungselement (A, D, E) die Form einer Walze hat und gegen die Gegenelektrode (C, F) gedreht werden kann.

8. Das Gerät nach einem der Ansprüche 4 bis 7, dadurch gekennzeichnet, daß es
   (H) mindestens eine Vorrichtung zum Betonern des in der Aufzeichnungsschicht (a) erzeugten Musters aus Oberflächenladungen mit festen oder flüssigen Tonern
   aufweist.

9. Das Gerät nach einem der Ansprüche 4 bis 8, dadurch gekennzeichnet, daß es
   (I) mindestens eine Vorrichtung zum übertragen des Tonerbildes von der Aufzeichnungsschicht (a) auf eine andere Oberfläche
   aufweist.

10. Das Gerät nach einem der Ansprüche 4 bis 9, dadurch gekennzeichnet, daß es
    (J) mindestens eine Vorrichtung zum Fixieren des Tonerbildes
    aufweist.

11. Das Gerät nach einem der Ansprüche 4 bis 10, dadurch gekennzeichnet, daß es
    (K) Vorrichtungen zum vollflächigen Erwärmen der Aufzeichnungsschicht (A, D, E) und zur Erzeugung elektrischer und/oder magnetischer Felder, welche das Aufzeichnungselement (A, D, E) vollflächig durchdringen können,
    aufweist.

12. Verwendung des Geräts gemäß einem der Ansprüche 4 bis 11 für die Durchführung des Verfahrens bzw. dessen Verwendung gemäß einem der Ansprüche 1 bis 3.

**Claims**

1. A process for the production of multicolor photocopies by successively producing residual electrical polarization images for each of the basic colors of an image subject on the surface of a recording layer (a), the polarization images containing electrically charged and uncharged parts, which comprises the following process steps:

   (1) applying a 0.1-20 µm thick recording layer (a) which solidifies in glassy form, is non-photoconductive or only slightly photoconductive and has chiral smectic liquid crystalline behavior and which can be switched to and fro above the glass stage by applying an external electric field, between different chiral smectic liquid crystalline order states, to the orientation layer (e) of an electrically conductive substrate (b) which contains a dimensionally stable substrate layer (c), an electrode layer (d) and the orientation layer (e) one on top of the other, resulting in a recording element (A, D, E),
   (2) imagewise reorientation, corresponding to the proportion of a basic color in the image subject, of the recording layer (a) in an electric field between the electrode layer (d) and a counter-electrode (C, F) which is arranged so that it can be removed again from the recording element (A, D, E), is switched oppositely with respect to the electrode layer (d) and is in direct, non-frictional contact with the recording layer (a), with formation of a residual electrical polarization image for the basic color, the polarization image containing parts which are stable at room temperature in the absence of electric and/or magnetic fields and which contain different chiral smectic liquid crystalline order states of the recording layer (a),
   (3) treatment of the residual polarization image with a liquid or solid toner corresponding to the basic color,
   (4) transfer of the toner image to another surface,
   (5) cleaning of the recording layer (a) to remove toner residues and deletion of the polarization image by heating (a) in the absence of an electric field and
   (6) repetition of process steps (2) to (5) for each of the other basic colors in the image subject.

2. Use of a process as claimed in claim 1 for the production of photocopies.

3. Use of a process as claimed in claim 1 for the production of relief layers.

4. Apparatus which is used for the reversible or irreversible production of an image by the imagewise action of an electric field on a recording layer (a), so that a pattern of surface charges which corresponds to the imagewise action of the electric field results on the surface of the recording layer (a), and which comprises

(A) one or more recording elements, containing

(a) a recording layer suitable for the process and
(b) an electrically conductive substrate, and

(B) one or more apparatuses for the imagewise action of an electric field on the recording element (A), consisting of a structured or unstructured, movable or stationary counter-electrode (C), wherein
(D) the recording layer (a) contains or consists of an organic material which solidifies in glassy form, is nonphotoconductive or only slightly photoconductive and has permanent dipoles and chiral smectic liquid crystalline behaviour, wherein the pattern of surface charges is produced without or almost without the formation of free charge carriers by reversible or irreversible imagewise orientation of some or all of the permanent dipoles present in the recording layer (a),
(E) the electrically conductive substrate (b) contains one or more

(c) dimensionally stable substrate layers,
(d) electrode layers and
(e) orientation layers

one on top of the other in the stated order, the recording layer (a) being present directly on the orientation layer (e), and
(F) the counter-electrode (C) is in direct, non-frictional contact with the recording layer (a) and is arranged in such a way that it can be removed again from the recording element (A, D, E), and it has either the form of a fixed electrode strip having point-like electrodes or the form of a point, which can be moved at a relative velocity over the recording element (A, D, E), for carrying out the process as claimed in claim 1 or 2 or 3.

5. Apparatus as claimed in claim 4, wherein the electrically conductive substrate (b) can be wholly or partly thermostated.

6. Apparatus as claimed in claim 4 or 5, wherein the recording element (A, D, E) is flat.

7. Apparatus as claimed in claim 4 or 5, wherein the recording element (A, D, E) is in the form of a roller and can be rotated against the counter-electrode (C, F).

8. Apparatus as claimed in claim 4 or 5 or 6 or 7, which has

(H) one or more apparatuses for treating the pattern of surface charges which is produced in the recording layer (a) with solid or liquid toners.

9. Apparatus as claimed in claim 4 or 5 or 6 or 7 or 8, which has

(I) one or more apparatuses for transferring the toner image from the recording layer (a) to another surface.

10. Apparatus as claimed in claim 4 or 5 or 6 or 7 or 8 or 9, which has

(J) one or more apparatuses for fixing the toner image.

11. Apparatus as claimed in claim 4 or 5 or 6 or 7 or 8 or 9 or 10, which has

(K) apparatuses for uniform heating of the recording layer (A, D, E) and for generating electric and/or magnetic fields which can uniformly penetrate the recording element (A, D, E).

12. Use of an apparatus as claimed in claim 4 or 5 or 6 or 7 or 8 or 9 or 10 or 11 for carrying out the process or its use as claimed in claim 1 or 2 or 3.

**Revendications**

1. Procédé pour la réalisation de photocopies en couleurs par production successive d'images de polarisation électrique rémanente pour chaque couleur de base d'un motif d'image sur la surface d'une couche d'enregistrement (a), les images de polarisation contenant des domaines électriquement chargés et non chargés, caractérisé par les étapes opératoires suivantes :

(1) application d'une couche d'enregistrement (a) d'une épaisseur de 0,1 µm à 20 µm, à solidification vitreuse, pas ou seulement peu photoconductrice, ayant un comportement de cristaux liquides smectiques chiraux, qui peut être alternativement mise en et hors circuit au-dessus du niveau vitreux par application d'un champ électrique externe entre différents états d'ordres mésomorphes smectiques chiraux, sur la couche d'orientation (e) d'un support (b) électriquement conducteur, qui contient une couche support (c) stable en dimensions, une couche d'électrode (d) et la couche d'orientation (e) superposées l'une sur l'autre, d'où il résulte un élément d'enregistrement (A, D, E),

(2) réorientation de la couche d'enregistrement (a) selon une image, correspondant quant au motif d'image à la partie d'une couleur de base, dans un champ électrique entre la couche d'électrode (d) et une contre-électrode (C, F), qui est agencée de telle sorte qu'elle peut être à nouveau éloignée de l'élément d'enregistrement (A, D, E), est reliée à l'opposé de la couche d'électrode (d) et est en contact direct, non soumise à une force, avec la couche d'enregistrement (a), avec formation d'une image de polarisation électrique rémanente, pour la couleur de base, l'image de polarisation contenant à température ambiante en l'absence de champs électriques et/ou magnétiques des domaines stables dans lesquels se trouvent différents états d'ordres mésomorphes smectiques chiraux de la couche d'enregistrement (a),

(3) chargement de toner de l'image de polarisation électrique rémanente avec un toner liquide ou solide correspondant à la couleur de base,

(4) transfert de l'image de toner sur une autre surface,

(5) nettoyage de la couche d'enregistrement (a) pour en éliminer les restes de toner et effacement de l'image de polarisation par chauffage de (a) en l'absence de champ électrique et

(6) répétition des étapes opératoires (2) à (5) pour chacune des autres couleurs de base dans le motif d'image.

2. Utilisation du procédé selon la revendication 1 pour la préparation de photocopies.

3. Utilisation du procédé selon la revendication 1 pour la préparation de couches en relief.

4. Appareil servant à la production réversible ou irréversible d'une représentation par application selon une image d'un champ électrique sur une couche d'enregistrement (a), d'où il résulte sur la surface de la couche d'enregistrement (a) une matrice de charges superficielles correspondant à l'action selon une image du champ électrique, et qui comprend

(A) au moins un élément d'enregistrement, contenant

(a) une couche d'enregistrement appropriée pour le procédé et
(b) un support électriquement conducteur, et

(B) au moins un dispositif pour faire agir un champ électrique selon une image sur l'élément d'enregistrement (A), consistant en une contre-électrode (C) mobile ou fixe, structurée ou non structurée,

caractérisé par le fait que

(D) la couche d'enregistrement (a) contient ou est formée d'une matière organique ayant un comportement mésomorphe smectique chiral, à solidification vitreuse, pas ou seulement peu photoconductrice, présentant des dipôles permanents, dans laquelle est formée la matrice de charges superficielles, sans ou pratiquement sans formation de supports de charges libres, par alignement réversible ou irréversible, selon une image, de la totalité ou d'une partie des dipôles permanents présents dans la couche d'enregistrement (a),

(E) le support électriquement conducteur (b) contient au moins

(c) une couche de support stable en dimensions,
(d) une couche d'électrode et
(e) une couche d'orientation superposées dans l'ordre indiqué, tandis que la couche d'enregistrement (a) s'appuie directement sur la couche d'orientation (e), et que

(F) la contre-électrode (C) est en contact direct, non soumise à une force, avec la couche d'enregistrement (a) et est agencée de façon à pouvoir être à nouveau éloignée de l'élément d'enregistrement (A, D, E), et avoir soit la forme d'une barre d'électrode fixe avec des électrodes ponctuelles, soit la forme d'une pointe pouvant être déplacée selon un mouvement relatif sur l'élément d'enregistrement (A, D, E), pour la mise en oeuvre du procédé selon l'une quelconque des revendications 1 à 3.

5. Appareil selon la revendication 4, caractérisé par le fait que le support électriquement conducteur (b) peut être totalement ou partiellement thermostatisé.

6. Appareil selon la revendication 4 ou 5, caractérisé par le fait que l'élément d'enregistrement (A, D, E) est plan.

7. Appareil selon l'une des revendications 4 ou 5, caractérisé par le fait que l'élément d'enregistrement (A, D, E) a la forme d'un cylindre et peut être mis en rotation contre la contre-électrode (C, F).

8. Appareil selon l'une quelconque des revendications 4 à 7, caractérisé par le fait qu'il présente
    (H) au moins un dispositif pour le chargement de toner sur le modèle de charges superficielles produit dans la couche d'enregistrement (a) avec des toners solides ou liquides.

9. Appareil selon l'une quelconque des revendications 4 à 8, caractérisé par le fait qu'il présente
    (I) au moins un dispositif pour le transfert de l'image de toner de la couche d'enregistrement (a) sur une autre surface.

10. Appareil selon l'une quelconque des revendications 4 à 9, caractérisé par le fait qu'il présente
    (J) au moins un dispositif pour la fixation de l'image de toner.

11. Appareil selon l'une quelconque des revendications 4 à 10, caractérisé par le fait qu'il présente
    (K) des dispositifs pour le chauffage sur toute sa surface de la couche d'enregistrement (a) (A, D, E) et pour la production de champs électriques et/ou magnétiques pouvant traverser toute la surface de l'élément d'enregistrement (A, D, E).

12. Utilisation de l'appareil selon l'une quelconque des revendications 4 à 11 pour la mise en oeuvre du procédé ou de son application selon l'une des revendications 1 à 3.